# EUROPEAN PATENT SPECIFICATION

(11) **EP 4 098 529 B1**
(45) Date of publication and mention of the grant of the patent: **06.05.2026**
(21) Application number: 22176087.9
(22) Date of filing: 30.05.2022
(51) Int. Cl.: B62J 35/00

(54) **STRADDLED VEHICLE**
GRÄTSCHSITZFAHRZEUG
VÉHICULE À ENFOURCHER

(30) Priority: 01.06.2021 JP 2021092397
(43) Date of publication of application: 07.12.2022
(73) Proprietor: Yamaha Hatsudoki Kabushiki Kaisha, Iwata-shi, Shizuoka 438-8501 (JP)
(72) Inventor: SAITOU, Susumu, Iwata-shi 4388501 (JP)
(74) Representative: Studio Torta S.p.A.

(56) References cited:
- EP-A1- 2 190 724
- EP-A1- 2 719 613
- US-A1- 2009 166 364
- US-A1- 2011 204 613
- US-B2- 9 828 055
- -: "XSR tank panels", 1 January 2020 (2020-01-01), pages 1 - 1, XP093180120, Retrieved from the Internet <URL:https://www.youtube.com/watch?v=sJHiSgn1jZU>
- -: "yamaha xsr 700", 21 September 2017 (2017-09-21), pages 1 - 1, XP093180110, Retrieved from the Internet <URL:https://ridermagazine.com/2017/09/21/2018-yamaha-xsr700-first-look-review/>
- -: "Fuel tank removal", 19 July 2021 (2021-07-19), pages 1 - 1, XP093180114, Retrieved from the Internet <URL:https://www.xsr700forums.com/threads/fuel-tank-cover-removal.5234/>

## Description

The present invention relates to a straddled vehicle including a tank cover that covers the fuel tank.

Conventional straddled vehicles including a tank cover that covers the fuel tank have been known in the art. Where the tank cover is formed as an integral part by an integral member, it is difficult to form the tank cover in a complicated shape. In contrast, where the tank cover is formed by assembling together a plurality of members, it is possible to relatively easily form a tank cover of a complicated shape. Therefore, tank covers have been known in the art that are assembled from a plurality of members.

JP2009-161016A discloses a tank cover composed of a center cover, a left side cover that is arranged leftward of the center cover, and a right side cover that is arranged rightward of the center cover. The center cover is made by molding resin into as an integral part. Where members that form the tank cover are made of resin, it is easy to mold the members.

With a straddled vehicle where the tank cover is arranged forward of the seat, the rider seated on the seat squeezes the tank cover with the knees, i.e., knee-gripping. Then, the tank cover is pressed against the knees of the rider. Now, one may consider using metal for members that form the tank cover in order to increase the strength of the tank cover. For example, one may consider using metal for the center cover, the left side cover and the right side cover of the tank cover disclosed in JP2009-161016A.

The fuel tank is attached to the frame, and the tank cover is attached to the fuel tank. When the straddled vehicle is running, depending on the speed of the engine, the characteristic vibration generated from the engine is transmitted to the fuel tank through the frame. Thus, the tank cover fastened to the fuel tank may vibrate. The center cover is connected to the left side cover and the right side cover. The center cover includes a connecting portion that is connected to the left side cover and a connecting portion that is connected to the right side cover. Where the center cover, the left side cover and the right side cover are made of metal, when the characteristic vibration generated from the engine is transmitted to the tank cover, resonance may occur in the connecting portions of the center cover, thereby deteriorating the riding comfort. Although the Yamaha model XSR 700 discloses some of the features of the independent claim, it at least does not disclose a stay fixed to the tank upper wall and a second left bolt extending downward that fastens together the left side cover and the stay and a second right bolt extending downward that fastens together the right side cover and the stay.

It is an object of the present invention to provide a straddled vehicle including a tank cover that is formed by assembling together a plurality of members, that is relatively rigid against knee-gripping, and that is unlikely to resonate in connecting portions between members.

A straddled vehicle disclosed herein includes: a seat; a fuel tank arranged forward of the seat; and a tank cover arranged forward of the seat and covering at least a portion of the fuel tank. The tank cover includes a center cover, a left side cover arranged leftward of the center cover, and a right side cover arranged rightward of the center cover. The left side cover includes a left-side wall located leftward of the fuel tank. The right side cover includes a right-side wall located rightward of the fuel tank. The center cover includes a left connecting portion connected to the left side cover, and a right connecting portion connected to the right side cover. The center cover is made of resin, and the left side cover and the right side cover are made of metal.

With the straddled vehicle described above, the tank cover is formed by assembling together at least the center cover, the left side cover and the right side cover. It is possible to relatively easily form the tank cover even if it the tank cover has a complicated shape. Although the left-side wall and the right-side wall are pressed against the knees of the rider when knee-gripping, the left side cover including the left-side wall and the right side cover including the right-side wall are made of metal. Therefore, it is possible to increase the rigidity of the tank cover against knee-gripping. On the other hand, while the left side cover and the right side cover are made of metal, the center cover is made of resin. The vibration characteristic of the center cover is relatively significantly different from the vibration characteristic of the left side cover and the right side cover. Thus, resonance is unlikely to occur between the left connecting portion and the right connecting portion of the center cover.

The fuel tank includes according to the invention a tank upper wall, a tank left-side wall located leftward of the tank upper wall, and a tank right-side wall located rightward of the tank upper wall. The center cover includes a center upper wall arranged upward of the tank upper wall. The left side cover includes an upper left wall extending rightward from the left-side wall and arranged upward of the tank upper wall. The right side cover includes an upper right wall extending leftward from the right-side wall and arranged upward of the tank upper wall. The center upper wall includes a first left edge portion overlapping with the upper left wall as the vehicle is viewed from above, and a first right edge portion overlapping with the upper right wall as the vehicle is viewed from above. The upper left wall may include a second right edge portion overlapping with the center upper wall as the vehicle is viewed from above. The upper right wall may include a second left edge portion overlapping with the center upper wall as the vehicle is viewed from above. The left connecting portion of the center cover is may be provided in the first left edge portion and connected to the second right edge portion of the left side cover. The right connecting portion of the center cover is be provided in the first right edge portion and connected to the second left edge portion of the right side cover.

Then, it is possible to relatively easily form the center cover, the left side cover and the right side cover. It is possible to relatively easily assemble together the center cover, the left side cover and the right side cover.

The straddled vehicle may include: a first left bolt extending downward that fastens together the left connecting portion of the center cover and the second right edge portion of the left side cover; and a first right bolt extending downward that fastens together the right connecting portion of the center cover and the second left edge portion of the right side cover.

Then, by fastening the first left bolt downward, it is possible to connect together the center cover and the left side cover. By fastening the first right bolt downward, it is possible to connect together the center cover and the right side cover. It is possible to relatively easily assemble together the center cover, the left side cover and the right side cover.

The first left edge portion of the center cover may overlap with the second right edge portion of the left side cover as the vehicle is viewed from above and be arranged upward of the second right edge portion. The first right edge portion of the center cover may overlap with the second left edge portion of the right side cover as the vehicle is viewed from above and be arranged upward of the second left edge portion.

Then, it is possible to hide the second right edge portion of the metal-made left side cover by the first left edge portion of the resin-made center cover. It is possible to hide the second left edge portion of the metal-made right side cover by the first right edge portion of the resin-made side cover.

The second right edge portion of the left side cover may include a first contact surface that is in contact with the first left edge portion of the center cover. The second left edge portion of the right side cover may include a second contact surface that is in contact with the first right edge portion of the center cover. The first left edge portion of the center cover may include a left end portion located leftward relative to the first contact surface and overlapping with the first contact surface as the vehicle is viewed from the side. The first right edge portion of the center cover may include a right end portion located rightward relative to the second contact surface and overlapping with the second contact surface as the vehicle is viewed from the side.

Then, the left side of the first contact surface is hidden by the left end portion of the center cover, and the right side of the second contact surface is hidden by the right end portion of the center cover. By the left end portion of the center cover, it is possible to suppress entry of dust or water into the gap between the first left edge portion of the center cover and the second right edge portion of the left side cover. By the right end portion of the center cover, it is possible to suppress entry of dust or water into the gap between the first right edge portion of the center cover and the second left edge portion of the right side cover. The first contact surface, which is the merging surface between the center cover and the left side cover, and the second contact surface, which is the merging surface between the center cover and the right side cover, are not visually perceived from the side, thereby achieving an aesthetic appearance.

The first left edge portion of the center cover may include a left end portion located leftward relative to the left connecting portion and overlapping with the left connecting portion as the vehicle is viewed from the side. The first right edge portion of the center cover may include a right end portion located rightward relative to the right connecting portion and overlapping with the right connecting portion as the vehicle is viewed from the side.

Then, the left side of the left connecting portion of the center cover is hidden by the left end portion of the center cover, and the right side of the right connecting portion of the center cover is hidden by the right end portion of the center cover. By the left end portion of the center cover, it is possible to suppress entry of dust or water around the left connecting portion of the center cover. By the right end portion of the center cover, it is possible to suppress entry of dust or water around the right connecting portion of the center cover. The left connecting portion and the right connecting portion of the center cover are not visually perceived from the side, thereby achieving an aesthetic appearance.

According to the invention, The straddled vehicle includes a stay fixed to the tank upper wall; a second left bolt extending downward that fastens together the left side cover and the stay; and a second right bolt extending downward that fastens together the right side cover and the stay.

Then, by fastening the second left bolt, it is possible to easily attach the left side cover to the fuel tank. By fastening the second right bolt, it is possible to easily attach the right side cover to the fuel tank.

The second left bolt includes a bolt head located upward relative to the second right edge portion of the left side cover. The second right bolt includes a bolt head located upward relative to the second left edge portion of the right side cover. The first left edge portion of the center cover includes a left end portion located leftward relative to the bolt head of the second left bolt and overlapping with the bolt head of the second left bolt as the vehicle is viewed from the side. The first right edge portion of the center cover includes a right end portion located rightward relative to the bolt head of the second right bolt and overlapping with the bolt head of the second right bolt as the vehicle is viewed from the side.

Then, the left side of the bolt head of the second left bolt is hidden by the left end portion of the center cover, and the right side of the bolt head of the second right bolt is hidden by the right end portion of the center cover. By the left end portion of the center cover, it is possible to suppress entry of dust or water around the second left bolt. By the right end portion of the center cover, it is possible to suppress entry of dust or water around the second right bolt. The bolt heads of the second left bolt and the second right bolt are not visually perceived from the side, thereby achieving an aesthetic appearance.

The left end portion and/or the right end portion of the center cover may be bent downward.

As the left end portion of the center cover is bent downward as described above, the left end portion is likely to hide the area that is rightward relative to the left end portion. Since the right end portion of the side cover is bent downward, the right end portion is likely to hide the area that is leftward relative to the right end portion. Note that since the center cover is made of resin, it is possible to relatively easily form the left end portion and the right end portion, which are bent downward.

The second right edge portion of the left side cover may include a first right portion extending leftward from a right end of the second right edge portion, and a second right portion located leftward and downward of the first right portion and extending leftward. The second left edge portion of the right side cover may include a first left portion extending rightward from a left end of the second left edge portion, and a second left portion located rightward and downward of the first left portion and extending rightward. The first left edge portion of the center cover may include a lower end located leftward and downward relative to the first right portion and upward relative to the second right portion. The first right edge portion of the center cover may include a lower end located rightward and downward relative to the first left portion and upward relative to the second left portion.

Then, dust or water is unlikely to enter through between the center cover and the left side cover and between the center cover and the right side cover.

The fuel tank may include a cylindrical portion extending upward from the tank upper wall. The cylindrical portion may be formed with a fuel filler hole whose opening faces upward. The center cover may be formed with a hole into which the cylindrical portion of the fuel tank is inserted.

Since the center cover is separate from the left side cover and the right side cover and is made of resin, it is possible to easily form the hole that is suitable for the cylindrical portion of the fuel tank.

A center of the fuel filler hole may be located rightward or leftward of a vehicle center line.

The center cover may be a single resin-made member.

The left side cover and the right side cover may each be a single metal-made member; and. The left side cover and the right side cover may overlap with an entirety of the fuel tank as the vehicle is viewed from the side.

According to the present invention, it is possible to provide a straddled vehicle including a tank cover that is formed by assembling together a plurality of members, that is relatively rigid against knee-gripping, and that is unlikely to resonate in connecting portions between members.

### BRIEF DESCRIPTION OF THE DRAWINGS

FIG. **1** is a left side view showing a motorcycle according to an embodiment.
FIG. **2** is a perspective view showing a fuel tank.
FIG. **3** is a left side view showing a tank cover.
FIG. **4** is a plan view showing the tank cover.
FIG. **5** is a front view showing the tank cover.
FIG. **6** is a back view showing the tank cover.
FIG. **7** is a plan view showing a left side cover, a right side cover, and the fuel tank.
FIG. **8** is a cross-sectional view taken along line VIII-VIII of FIG. **4****.**
FIG. **9** is a cross-sectional view taken along line IX-IX of FIG. **4****.**
FIG. **10** is a cross-sectional view taken along line X-X of FIG. **4****.**
FIG. **11** is a cross-sectional view taken along line XI-XI of FIG. **4****.**

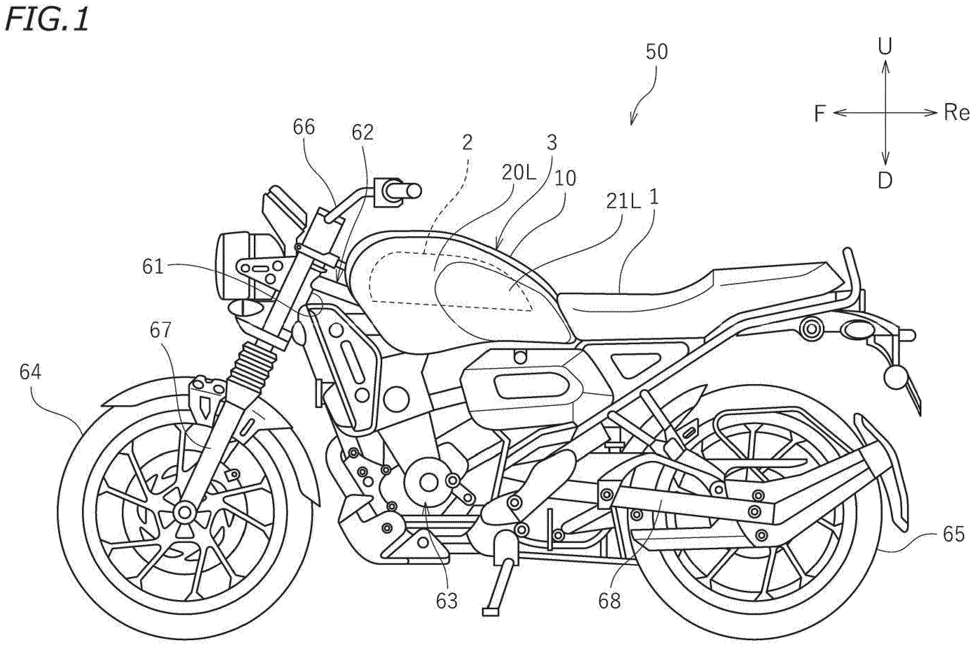

An embodiment will now be described with reference to the drawings. FIG. **1** is a left side view of a motorcycle **50,** which is an example of the straddled vehicle.

The terms front, rear, left, right, up and down, as used in the description below, refer to these directions as viewed from a virtual rider seated on a seat 1 while the motorcycle **50** is standing upright on a horizontal surface with no rider and no load thereon, unless specified otherwise. The designations F, Re, L, R, U and D, as used in the figures, refer to front, rear, left, right, up and down, respectively.

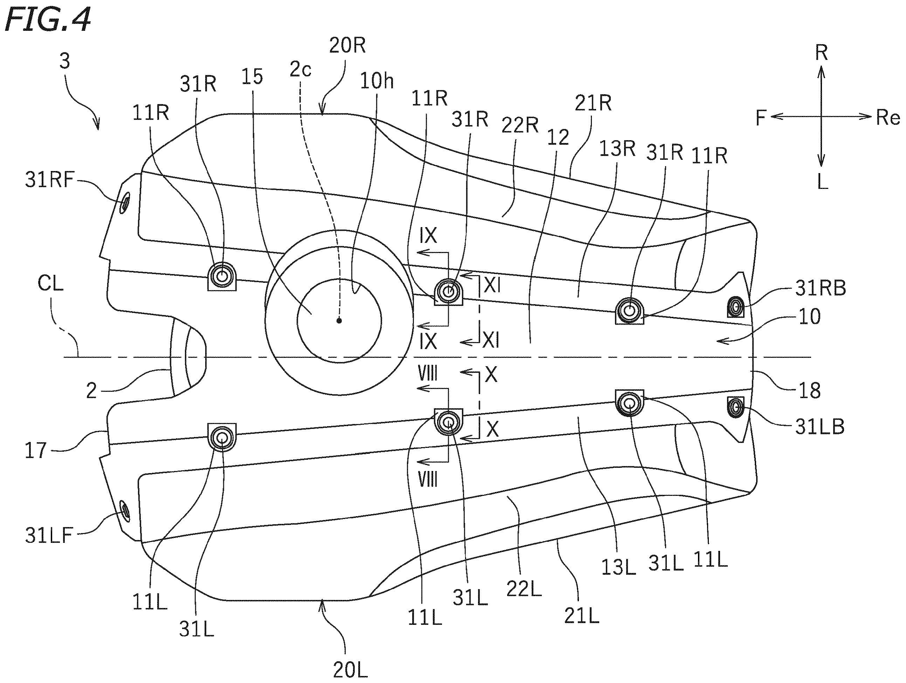

The term "forward" refers not only to the direction that extends horizontally in the front direction along the vehicle center line **CL** (see FIG. **4****),** but also to directions that are inclined from that direction by an angle that is less than 90 degrees. The term "rearward" refers not only to the direction that extends horizontally rearward along the vehicle center line **CL,** but also to directions that are inclined from that direction by an angle that is less than 90 degrees. The term "leftward" refers not only to the direction that extends horizontally leftward along a line that is vertical to the vehicle center line **CL,** but also to directions that are inclined from that direction by an angle that is less than 90 degrees. The term "rightward" refers not only to the direction that extends horizontally rightward along a line that is vertical to the vehicle center line **CL,** but also to directions that are inclined from that direction by an angle that is less than 90 degrees. The term "upward" refers not only to the direction that extends upward along the vertical line, but also to directions that are inclined from that direction by an angle that is less than 90 degrees. The term "downward" refers not only to the direction that extends downward along the vertical line, but also to directions that are inclined from that direction by an angle that is less than 90 degrees.

The motorcycle **50** includes a body frame **62** including a head pipe **61,** an internal combustion engine **63,** a front wheel **64,** a rear wheel **65,** a fuel tank **2,** a tank cover **3** that covers at least a portion of the fuel tank **2,** and the seat **1.**

A steering shaft (not shown) is supported on the head pipe **61** so that the steering shaft can rotate left and right. A handlebar **66** is fixed to the steering shaft. A front fork **67** is connected to the steering shaft. The front wheel **64** is rotatably supported on the front fork **67.** The rear wheel **65** is rotatably supported on the rear end portion of a rear arm **68.** The front end portion of the rear arm **68** is connected to the body frame **62** by a pivot shaft (not shown). The rear arm **68** is supported on the body frame **62** so that the rear arm **68** can swing up and down. The internal combustion engine **63** is supported on the body frame **62.** The internal combustion engine **63** and the rear wheel **65** are linked together by a power transmission member (not shown) such as a chain.

The fuel tank **2,** the tank cover **3** and the seat **1** are supported on the body frame **62.** The fuel tank **2** and the tank cover **3** are arranged forward of the seat **1.** The fuel tank **2** and the tank cover **3** are arranged upward of the internal combustion engine **63.**

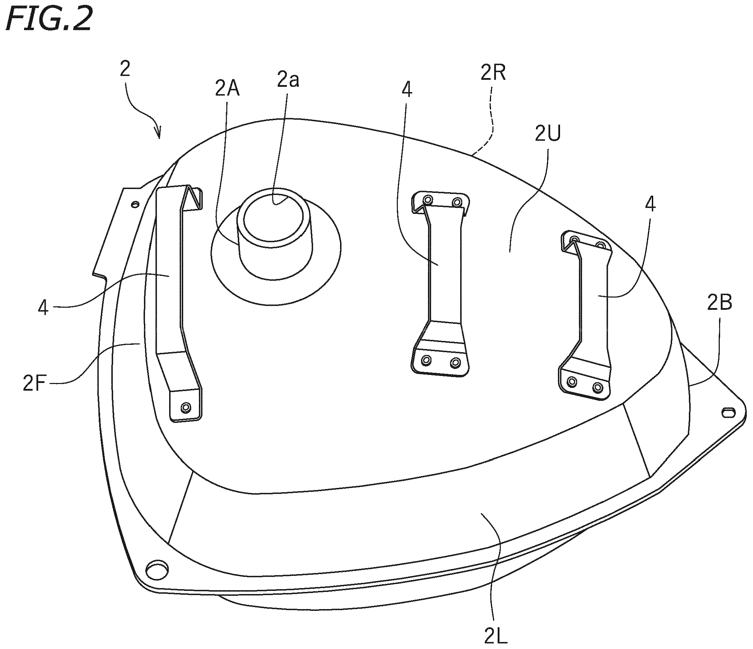

FIG. **2** is a perspective view showing the fuel tank **2.** The fuel tank **2** includes a tank upper wall **2U**, a tank left wall **2L** located leftward of the tank upper wall **2U,** a tank right wall **2R** located rightward of the tank upper wall **2U,** a tank front wall **2F** located forward of the tank upper wall **2U,** and a tank back wall **2B** located rearward of the tank upper wall **2U.** The fuel tank **2** includes a cylindrical portion **2A** extending upward from the tank upper wall **2U.** The cylindrical portion **2A** is formed with a fuel filler hole **2a** whose opening faces upward.

Stays **4** are fixed to the tank upper **wall 2U.** Here, three stays **4** are fixed to the tank upper wall **2U.** Note however that the number of stays **4** is not limited to three. Each stay **4** extends in the left-right direction. The three stays **4** are arranged in the front-rear direction.

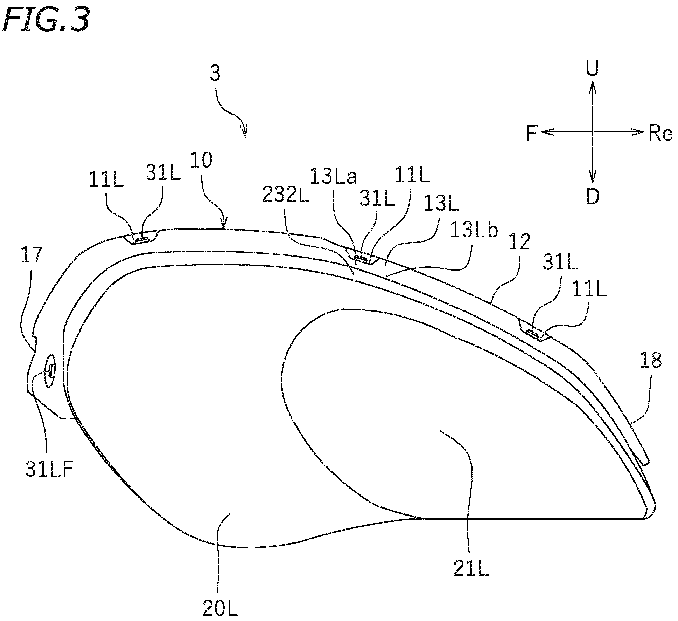

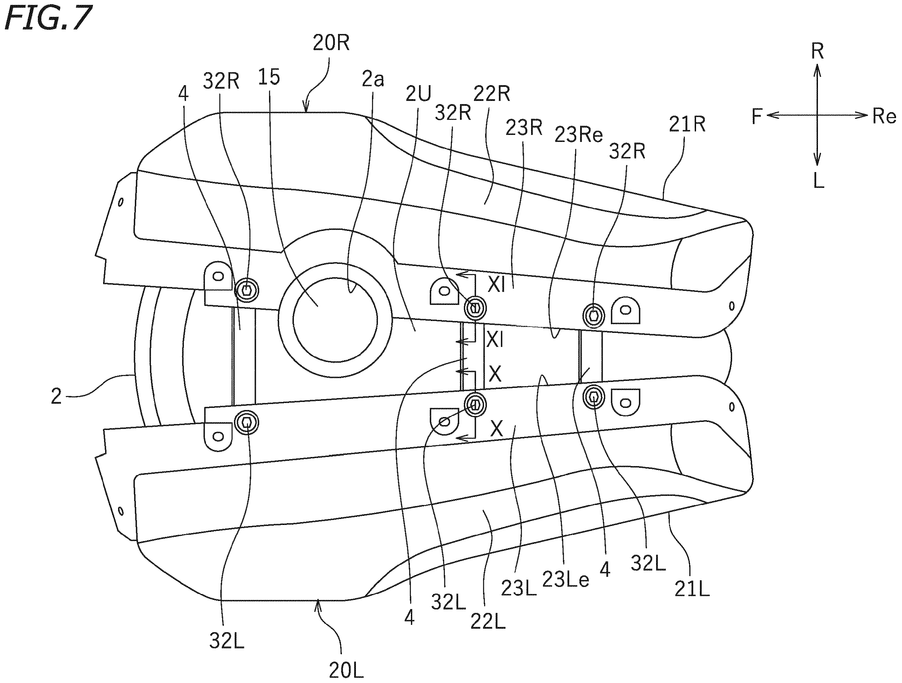

FIG. **3****,** FIG. **4****,** FIG. **5** and FIG. **6** are a left side view, a plan view, a front view and a back view, respectively, showing the tank cover **3.** The tank cover **3** according to the present embodiment is formed by assembling together a plurality of members. As shown in FIG. **4****,** as the plurality of members, the tank cover **3** includes a center cover **10,** a left side cover **20L** arranged leftward of the center cover **10,** and a right side cover **20R** arranged rightward of the center cover **10.** The tank cover **3** is formed by assembling together the center cover **10,** the left side cover **20L** and the right side cover **20R.** FIG. **7** **is** a plan view showing the left side cover **20L,** the right side cover **20R** and the fuel tank **2.** FIG. **7** shows the state where the center cover **10** has been removed from the tank cover **3.**

Although not shown in the figures, the left side cover **20L** and the right side cover **20R** are fixed to the stays provided on the body frame **62.** The left side cover **20L** and the right side cover **20R** are supported on the body frame **62.** The left side cover **20L** covers the left portion of the entirety of the fuel tank **2,** and the right side cover **20R** covers the right portion of the entirety of the fuel tank **2.** As the vehicle is viewed from the side, the left side cover **20L** and the right side cover **20R** overlap with the entirety of the fuel tank **2** (see FIG. **1****).**

The center cover **10** is made of resin. Although the center cover **10** may be formed by combining together a plurality of resin-made members, it is a single resin-made member in the present embodiment. The center cover **10** is made by molding resin into as an integral part. Although there is no particular limitation on the specific material of the center cover **10,** it may be made of ABS (acrylonitrile butadiene styrene), PP (polypropylene), CFRP (carbon fiber reinforced plastic), etc., for example. The left side cover **20L** and the right side cover **20R** are made of metal. Although the left side cover **20L** and the right side cover **20R** may each be formed by combining together a plurality of metal-made members, they are each a single metal-made member in the present embodiment. Although there is no particular limitation on the specific material of the left side cover **20L** and the right side cover **20R,** they may be made of iron, stainless steel, aluminum, etc., for example.

The rider knee-grips while riding the motorcycle **50.** While the motorcycle **50** is running, the rider seated on the seat **1** squeezes the tank cover **3** with the knees. The left side cover **20L** includes a left-side wall **21L** located leftward of the fuel tank **2.** The right side cover **20R** includes a right-side wall **21R** located rightward of the fuel tank **2.** When knee-gripping, the left-side wall **21L** is pressed against the left knee of the rider and the right-side wall **21R** is pressed against the right knee of the rider.

As shown in FIG. **4****,** the center cover **10** includes a center upper wall **12** arranged upward of the tank upper wall **2U of** the fuel tank **2.** The center upper wall **12** is formed with a hole **10h** through which the cylindrical portion **2A** of the fuel tank **2** is inserted. A removable lid **15** is fitted to the fuel filler hole **2a** of the fuel tank **2.** In the present embodiment, the center **2c** of the fuel filler hole **2a** is shifted off the vehicle center line **CL.** The center **2c** of the fuel filler hole **2a** is located rightward of the vehicle center line **CL.** Note however that there is no particular limitation. The center **2c** of the fuel filler hole **2a** may be located leftward of the vehicle center line **CL.** The center **2c** of the fuel filler hole **2a** may be located on the vehicle center line **CL.**

The center upper wall **12** includes a first left edge portion **13L** overlapping with the left side cover **20L** as the vehicle is viewed from above, and a first right edge portion **13R** overlapping with the right side cover **20R** as the vehicle is viewed from above. The center cover **10** includes a plurality of left connecting portions **11L** connected to the left side cover **20L,** and a plurality of right connecting portions **11R** connected to the right side cover **20R.** The left connecting portions **11L** are provided in the first left edge portion **13L.** The right connecting portions **11R** are provided in the first right edge portion **13R.**

As shown in FIG. **7****,** the left side cover **20L** includes an upper left wall**22L** extending rightward from the left-side wall **21L.** The upper left wall **22L** is arranged upward of the tank upper wall **2U** of the fuel tank **2.** The upper left wall **22L** includes a second right edge portion **23L** overlapping with the center upper wall **12** of the center cover **10** as the vehicle is viewed from above. As shown in FIG. **4****,** the first left edge portion **13L** of the center upper wall **12** overlaps with the second right edge portion **23L** of the upper left wall **22L** as the vehicle is viewed from above and is arranged upward of the second right edge portion **23L.** The left connecting portions **11L** of the center upper wall **12** are connected to the second right edge portion **23L** of the upper left wall **22L.**

As shown in FIG. **7****,** the right side cover **20R** includes an upper right wall **22R** extending leftward from the right-side wall **21R.** The upper right wall **22R** is arranged upward of the tank upper wall **2U** of the fuel tank **2.** The upper right wall **22R** includes a second left edge portion **23R** overlapping with the center upper wall **12** of the center cover **10** as the vehicle is viewed from above. As shown in FIG. **4****,** the first right edge portion **13R** of the center upper wall **12** overlaps with the second left edge portion **23R** of the upper right wall **22R** as the vehicle is viewed from above and is arranged upward of the second left edge portion **23R.** The right connecting portions **11R** of the center upper wall **12** are connected to the second left edge portion **23R** of the upper right wall **22R.**

As shown in FIG. **4****,** the center cover **10** is connected to the left side cover **20L** by a plurality of first left bolts **31L.** The first left bolts **31L** fasten together the left connecting portions **11L** of the center cover **10** and the second right edge portion **23L** of the left side cover **20L.** The center cover **10** is connected to the right side cover **20R** by a plurality of first right bolts **31R.** The first right bolts **31R** fasten together the right connecting portions **11R** of the center cover **10** and the second left edge portion **23R** of the right side cover **20R.** The first left bolts **31L** and the first right bolts **31R** extend downward.

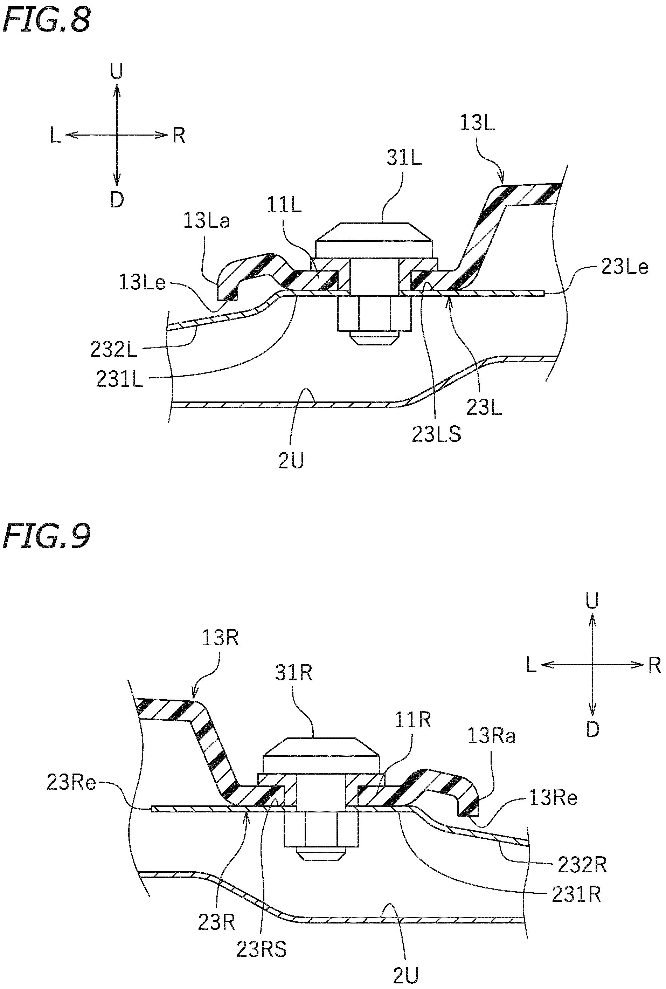

FIG. **8** is a cross-sectional view taken along line VIII-VIII of FIG. **4****.** The second right edge portion **23L** of the left side cover **20L** includes a first contact surface **23LS** that is in contact with the first left edge portion **13L** of the center cover **10.** The left connecting portion **11L** of the center cover **10** is a portion that is in contact with the first contact surface **23LS** of the left side cover **20L,** and is a portion around the first left bolt **31L.** The first left edge portion **13L** of the center cover **10** includes a left end portion **13La** that is bent downward.

The left end portion **13La** of the center cover **10** is located leftward relative to the first contact surface **23LS** and overlaps with the first contact surface **23LS** as the vehicle is viewed from the side (see FIG. **3****).** The left end portion **13La** covers the left side of the first contact surface **23LS.** As viewed from the left side, the left end portion **13La** hides the first contact surface **23LS.** The left end portion **13La** is located leftward relative to the left connecting portions **11L** and overlaps with the left connecting portions **11L** as the vehicle is viewed from the side. The left end portion **13La** covers the left side of the left connecting portions **11L.** As viewed from the left side, the left end portion **13La** hides the left connecting portion **11L.** As viewed from the left side, the left end portion **13La** hides a right end **23Le** of the left side cover **20L.** A right end **23Le** of the left side cover **20L** is not visually perceived from outside the tank cover **3.**

The second right edge portion **23L** of the left side cover **20L** includes a first right portion **231L** extending leftward from the right end **23Le** of the second right edge portion **23L,** and a second right portion **232L** located leftward and downward of the first right portion **231L** and extending leftward. A lower end **13Le** of the first left edge portion **13L** of the center cover **10** is located leftward and downward relative to the first right portion **231L** and upward relative to the second right portion **232L.** The lower end **13Le** of the first left edge portion **13L** is spaced apart from the second right portion **232L.**

FIG. **9** is a cross-sectional view taken along line IX-IX of FIG. **4****.** The cross-sectional configuration shown in FIG. **9** is in left-right symmetry with the above-described cross-sectional configuration shown in FIG. **8****.** That is, the second left edge portion **23R** of the right side cover **20R** includes a second contact surface **23RS** that is in contact with the first right edge portion **13R** of the center cover **10.** The right connecting portion **11R** of the center cover **10 is** a portion that is in contact with the second contact surface **23RS** of the right side cover **20R** and is a portion around the first right bolts **31R.** The first right edge portion **13R** of the center cover **10** includes a right end portion **13Ra** that is bent downward.

The right end portion **13Ra** of the center cover **10** is located rightward relative to the second contact surface **23RS** and overlaps with the second contact surface **23RS** as the vehicle is viewed from the side. The right end portion **13Ra** covers the right side of the second contact surface **23RS.** As viewed from the right side, the right end portion **13Ra** hides the second contact surface **23RS.** The right end portion **13Ra** is located rightward relative to the right connecting portion **11R** and overlaps with the right connecting portion **11R** as the vehicle is viewed from the side. The right end portion **13Ra** covers the right side of the right connecting portion **11R.** As viewed from the right side, the right end portion **13Ra** hides the right connecting portion **11R.** As viewed from the right side, the right end portion **13Ra** hides the left end **23Re** of the right side cover **20R.** The left end **23Re** of the right side cover **20R** cannot be seen from outside the tank cover **3.**

The second left edge portion **23R** of the right side cover **20R** includes a first left portion **231R** extending rightward from the left end **23Re** of the second left edge portion **23R,** and a second left portion **232R** located rightward and downward of the first left portion **231R** and extending rightward. A lower end **13Re** of the first right edge portion **13R** of the center cover **10** is located rightward and downward relative to the first left portion **231R** and upward relative to the second left portion **232R.** The lower end **13Re** of the first right edge portion **13R** is spaced apart from the second left portion **232R.**

The left side cover **20L** and the right side cover **20R** are fixed to the fuel tank **2** via the stays **4.** As shown in FIG. **7****,** the left side cover **20L** is connected to the stays **4** by second left bolts **32L.** The second left bolts **32L** fasten together the second right edge portion **23L** of the left side cover **20L** and the stays **4.** The right side cover **20R** is connected to the stays **4** by second right bolts **32R.** The second right bolts **32R** fasten together the second left edge portion **23R** of the right side cover **20R** and the stays **4.** The second left bolts **32L** and the second right bolts **32R** extend downward.

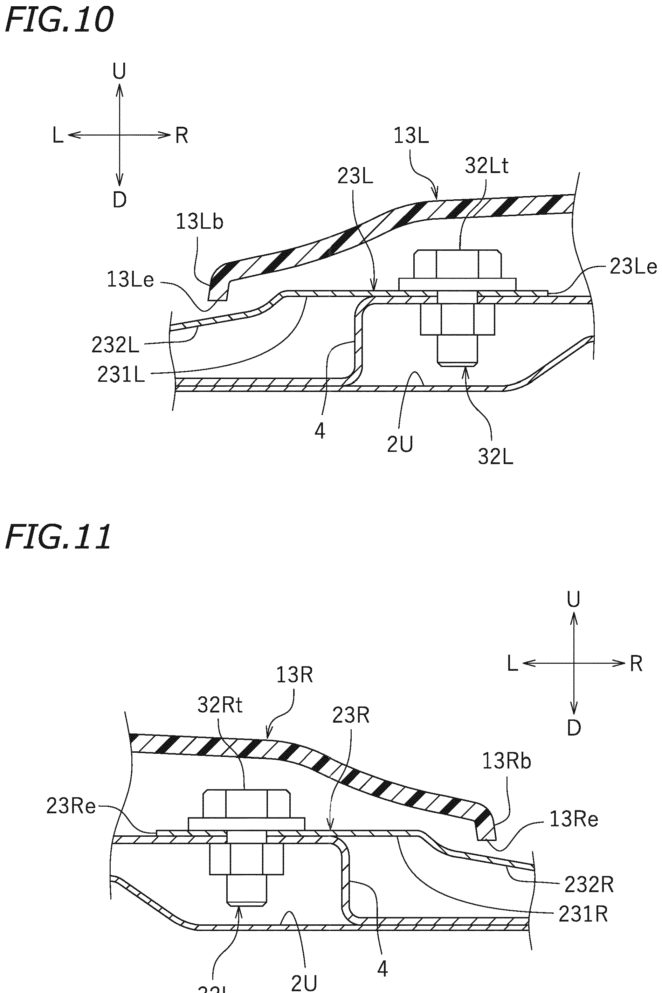

FIG. **10** is a cross-sectional view taken along line X-X of FIG. **4****.** Note that line X-X is shown in the same location also in FIG. **7****.** The second left bolt **32L** includes a bolt head **32Lt** located upward relative to the second right edge portion **23L** of the left side cover **20L.** Here, the bolt head **32Lt** is formed so as to have a hexagonal cross section. The first left edge portion **13L** of the center cover **10** includes a left end portion **13Lb** that is bent downward. The left end portion **13Lb** is located leftward relative to the bolt head **32Lt** and overlaps with the bolt head **32Lt** as the vehicle is viewed from the side (see FIG. **3****).** The left end portion **13Lb** covers the left side of the bolt head **32Lt.** Also in the cross section shown in FIG. **10****,** the lower end **13Le** of the first left edge portion **13L** of the center cover **10** is located leftward and downward relative to the first right portion **231L** of the left side cover **20L** and upward relative to the second right portion **232L.** The lower end **13Le** of the first left edge portion **13L** is spaced apart from the second right portion **232L.**

FIG. **11** is a cross-sectional view taken along line XI-XI of FIG. **4****.** The cross-sectional configuration shown in FIG. **11** is in left-right symmetry with the above-described cross-sectional configuration shown in FIG. **10****.** That is, a second right bolt **32R** includes a bolt head **32Rt** located upward relative to the second left edge portion **23R** of the right side cover **20R.** Here, the bolt head **32Rt** is formed so as to have a hexagonal cross section. The first right edge portion **13R** of the center cover 10 includes a right end portion **13Rb** that is bent downward. The right end portion **13Rb** is located rightward relative to the bolt head **32Rt** and overlaps with the bolt head **32Rt** as the vehicle is viewed from the side. The right end portion **13Rb** covers the right side of the bolt head **32Rt.** Also in the cross section shown in FIG. **11****,** the lower end **13Re** of the first right edge portion **13R** of the center cover **10 is** located rightward and downward relative to the first left portion **231R** of the right side cover **20R** and upward relative to the second left portion **232R.** The lower end **13Re** of the first right edge portion **13R** is spaced apart from the second left portion **232R.**

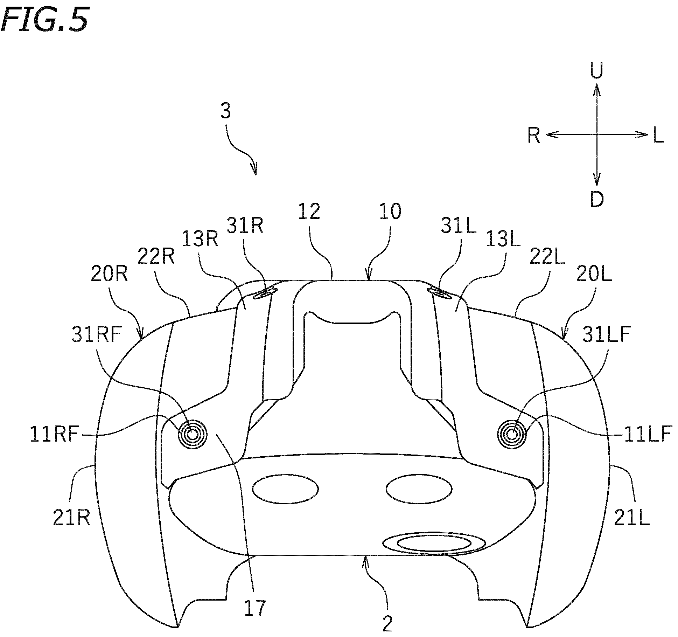

As shown in FIG. **5****,** the center cover **10** includes another left connecting portion **11LF** connected to the left side cover **20L** and another right connecting portion **11RF** connected to the right side cover **20R,** in addition to the left connecting portions **11L** and the right connecting portions **11R** described above. The left connecting portion **11LF** and the right connecting portion **11RF** are provided on a front wall **17** of the center cover **10.** The left connecting portion **11LF** is laid on the left side cover **20L** from the forward side. The right connecting portion **11RF** is laid on the right side cover **20R** from the forward side. The left connecting portion **11LF** and the left side cover **20L** are connected together by a left bolt **31LF.** The right connecting portion **11RF** and the right side cover **20R** are connected together by a right bolt **31RF.** The left bolt **31LF** and the right bolt **31RF** extend rearward.

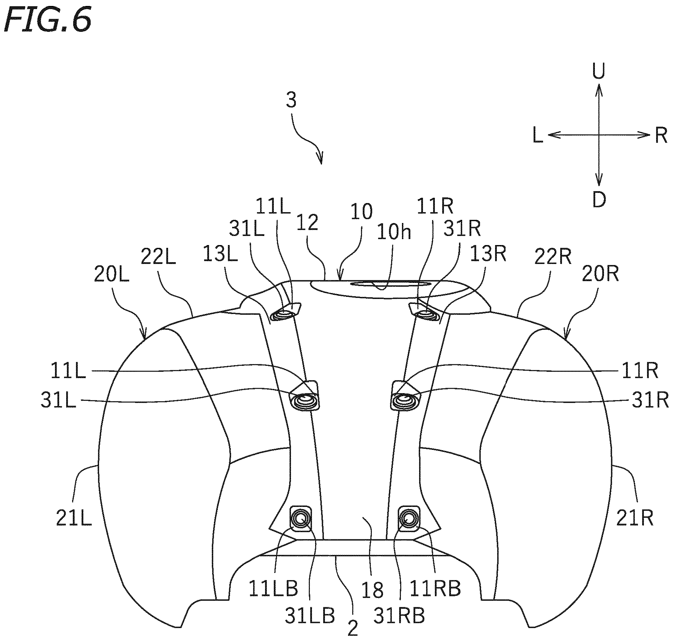

As shown in FIG. **6****,** the center cover **10** includes another left connecting portion **11LB** connected to the left side cover **20L** and another right connecting portion **11RB** connected to the right side cover **20R.** The left connecting portion **11LB** and the right connecting portion **11RB** are provided on a rear wall **18** of the center cover **10.** The left connecting portion **11LB** is laid on the left side cover **20L** from the rear side. The right connecting portion **11RB** is laid on the right side cover **20R** from the rear side. The left connecting portion **11LB** and the left side cover **20L** are connected together by a left bolt **31LB.** The right connecting portion **11RB** and the right side cover **20R** are connected together by a right bolt **31RB.** The left bolt **31LB** and the right bolt **31RB** extend forward.

With the tank cover **3,** the center cover **10** and the left side cover **20L** are connected directly to each other, and the center cover **10** and the right side cover **20R** are connected directly to each other. The fuel tank **2** is absent between the center cover **10** and the left side cover **20L,** and the fuel tank **2** is absent between the center cover **10** and the right side cover **20R.** The left side cover **20L** and the right side cover **20R** are connected to the fuel tank **2** via the stays **4.** The center cover **10** is not connected to the fuel tank **2.** The center cover **10** is connected to the fuel tank **2** via the left side cover **20L** and the right side cover **20R.**

The motorcycle **50** is configured as described above. Next, various advantageous effects of the motorcycle **50** according to the present embodiment will be described.

With the motorcycle **50,** the tank cover **3** is formed by assembling together the resin-made center cover **10** and the metal-made left side cover **20L** and the metal-made right side cover **20R.** Therefore, it is possible to relatively easily form the tank cover **3** even if it has a complicated shape.

When the rider knee-grips, the left-side **wall 21L** and the right-side **wall 21R** of the tank cover **3** are pressed against the knees of the rider. The left side cover **20L** provided with the left-side wall **21L** and the right side cover **20R** provided with the right-side wall **21R** are made of metal. Therefore, as compared with a case where the left side cover **20L** and the right side cover **20R** are made of resin, it is possible to increase the rigidity against knee-gripping.

Since the tank cover **3** is formed by assembling together the center cover **10,** the left side cover **20L** and the right side cover **20R,** the center cover **10** includes the left connecting portions **11L** connected to the left side cover **20L** (see FIG. **8****)** and the right connecting portions **11R** connected to the right side cover **20R** (see FIG. **9****).** Now, while the left side cover **20L** and the right side cover **20R** are made of metal, the center cover **10** is made of resin. The material of the left side cover **20L** and the right side cover **20R** is different from the material of the center cover **10.** Therefore, the vibration characteristic of the left side cover **20L** and the right side cover **20R** is relatively significantly different from the vibration characteristic of the center cover **10.** Thus, resonance is unlikely to occur between the left side cover **20L** and the left connecting portions **11L** of the center cover **10.** Resonance is unlikely to occur between the right side cover **20R** and the right connecting portions **11R** of the center cover **10.**

Therefore, the tank cover **3** of the motorcycle **50** is formed by assembling together a plurality of members, and is a tank cover that has a relatively high rigidity against knee-gripping and with which resonance is unlikely to occur between connecting portions of the members.

According to the present embodiment, the center cover **10** includes the center upper wall **12** arranged upward of the tank upper wall **2U** of the fuel tank **2.** The left side cover **20L** includes the left-side wall **21L** and the upper left wall **22L.** The right side cover **20R** includes the right-side wall **21R** and the upper right wall **22R.** The center upper wall **12** includes the first left edge portion **13L** overlapping with the upper left wall **22L** as the vehicle is viewed from above, and the first right edge portion **13R** overlapping with the upper right wall **22R** as the vehicle is viewed from above. The upper left wall **22L** includes the second right edge portion **23L** overlapping with the center upper wall **12** as the vehicle is viewed from above. The upper right wall **22R** includes the second left edge portion **23R** overlapping with the center upper wall **12** as the vehicle is viewed from above. The left connecting portions **11L** of the center cover **10** are provided on the first left edge portion **13L** and connected to the second right edge portion **23L** of the left side cover **20L.** The right connecting portions **11R** of the center cover **10** are provided on the first right edge portion **13R** and connected to the second left edge portion **23R** of the right side cover **20R.** According to the present embodiment, it is possible to relatively easily form the center cover **10,** the left side cover **20L** and the right side cover **20R.** Moreover, it is possible to relatively easily assemble together the center cover **10,** the left side cover **20L** and the right side cover **20R.**

According to the present embodiment, the left connecting portions **11L** of the center cover **10** and the second right edge portion **23L** of the left side cover **20L** are connected together by the first left bolts **31L** extending downward. The right connecting portions **11R** of the center cover **10** and the second left edge portion **23R** of the right side cover **20R** are connected together by the first right bolts **31R** extending downward. By fastening the first left bolts **31L** downward, it is possible to connect together the center cover **10** and the left side cover **20L.** By fastening the first right bolts **31R** downward, it is possible to connect together the center cover **10** and the right side cover **20R.** According to the present embodiment, it is possible to relatively easily assemble together the center cover **10,** the left side cover **20L** and the right side cover **20R.**

According to the present embodiment, the first left edge portion **13L** of the center cover **10** overlaps with the second right edge portion **23L** of the left side cover **20L** as the vehicle is viewed from above and is arranged upward of the second right edge portion **23L.** The first right edge portion **13R** of the center cover **10** overlaps with the second left edge portion **23R** of the right side cover **20R** as the vehicle is viewed from above and is arranged upward of the second left edge portion **23R.** According to the present embodiment, by the first left edge portion **13L** of the resin-made center cover **10,** it is possible to hide the second right edge portion **23L** of the metal-made left side cover **20L.** By the first right edge portion **13R** of the resin-made center cover **10,** it is possible to hide the second left edge portion **23R** of the metal-made right side cover **20R.**

According to the present embodiment, as shown in FIG. **8****,** the left end portion **13La** of the first left edge portion **13L** of the center cover **10** is located leftward relative to the first contact surface **23LS** of the left side cover **20L** and overlaps with the first contact surface **23LS** as the vehicle is viewed from the side. The right end portion **13Ra** of the first right edge portion **13R** of the center cover **10** is located rightward relative to the second contact surface **23RS** of the right side cover **20R** and overlaps with the second contact surface **23RS** as the vehicle is viewed from the side. According to the present embodiment, the left side of the first contact surface **23LS** is hidden by the left end portion **13La** of the center cover **10,** and the right side of the second contact surface **23RS** is hidden by the right end portion **13Ra** of the center cover **10.** By the left end portion **13La** of the center cover **10,** it is possible to suppress entry of dust or water into the gap between the first left edge portion **13L** of the center cover **10** and the second right edge portion **23L** of the left side cover **20L.** By the right end portion **13Ra** of the center cover **10,** it is possible to suppress entry of dust or water into the gap between the first right edge portion **13R** of the center cover **10** and the second left edge portion **23R** of the right side cover **20R.** The first contact surface **23LS,** which is the merging surface between the center cover **10** and the left side cover **20L,** and the second contact surface **23RS,** which is the merging surface between the center cover **10** and the right side cover **20R,** are not visually perceived from the side, thereby achieving an aesthetic appearance.

According to the present embodiment, as shown in FIG. **8****,** the first left edge portion **13L** of the left end portion **13La** of the center cover **10** is located leftward relative to the left connecting portion **11L** and overlaps with the left connecting portion **11L** as the vehicle is viewed from the side. The first right edge portion **13R** of the right end portion **13Ra** of the center cover **10** is located rightward relative to the right connecting portion **11R** and overlaps with the right connecting portion **11R** as the vehicle is viewed from the side. According to the present embodiment, the left side of the left connecting portion **11L** of the center cover **10** is hidden by the left end portion **13La** of the center cover **10,** and the right side of the right connecting portion **11R** of the center cover **10** is hidden by the right end portion **13Ra** of the center cover **10.** By the left end portion **13La** of the center cover **10,** it is possible to suppress entry of dust or water around the left connecting portion **11L** of the center cover **10.** By the right end portion **13Ra** of the center cover **10,** it is possible to suppress entry of dust or water around the right connecting portion **11R** of the center cover **10.** The left connecting portion **11L** and the right connecting portion **11R** of the center cover **10** are not visually perceived from the side, thereby achieving an aesthetic appearance.

According to the present embodiment, the stays **4** are fixed to the tank upper wall **2U** of the fuel tank **2.** The left side cover **20L** is connected to the stays **4** by the second left bolts **32L** extending downward. The right side cover **20R** is connected to the stays **4** by the second right bolts **32R** extending downward. According to the present embodiment, by fastening the second left bolts **32L,** it is possible to easily fix the left side cover **20L** to the fuel tank **2.** By fastening the second right bolts **32R,** it is possible to easily fix the right side cover **20R** to the fuel tank **2.**

According to the present embodiment, as shown in FIG. **10****,** the left end portion **13Lb** of the first left edge portion **13L** of the center cover **10** is located leftward relative to the bolt head **32Lt** of the second left bolt **32L** and overlaps with the bolt head **32Lt** as the vehicle is viewed from the side. The right end portion **13Rb** of the first right edge portion **13R** of the center cover **10** is located rightward relative to the bolt head **32Rt** of the second right bolt **32R** and overlaps with the bolt head **32Rt** as the vehicle is viewed from the side. According to the present embodiment, the left side of the bolt head **32Lt** of the second left bolt **32L** is hidden by the left end portion **13Lb** of the center cover **10,** and the right side of the bolt head **32Rt** of the second right bolt **32R** is hidden by the right end portion **13Rb** of the center cover **10.** By the left end portion **13Lb** of the center cover **10,** it is possible to suppress entry of dust or water around the second left bolt **32L.** By the right end portion **13Rb** of the center cover **10,** it is possible to suppress entry of dust or water around the second right bolt **32R.** The bolt heads **32Lt** and **32Rt** of the second left bolt **32L** and the second right bolt **32R** are not visually perceived from the side, thereby achieving an aesthetic appearance.

Although there is no limitation on the shape of the left end portion **13La** and **13Lb** and the right end portions **13Ra** and **13Rb** of the center cover **10,** the left end portions **13La** and **13Lb** and the right end portions **13Ra** and **13Rb** are bent downward according to the present embodiment. Therefore, the left end portions **13La** and **13Lb** are likely to hide the area that is rightward relative to the left end portions **13La** and **13Lb.** The right end portions **13Ra** and **13Rb** are likely to hide the area that is leftward relative to the right end portions **13Ra** and **13Rb.** Note that since the center cover **10** is made of resin, it is possible to relatively easily form the left end portions **13La** and **13Lb** and the right end portions **13Ra** and **13Rb** that are bent downward.

According to the present embodiment, as shown in FIG. **8** and FIG. **10****,** the second right edge portion **23L** of the left side cover **20L** includes the first right portion **231L** extending leftward from the right end **23Le** of the second right edge portion **23L,** and the second right portion **232L** located leftward and downward of the first right portion **231L** and extending leftward. As shown in FIG. **9** and FIG. **11****,** the second left edge portion **23R** of the right side cover **20R** includes the first left portion **231R** extending rightward from the left end **23Re** of the second left edge portion **23R,** and the second left portion **232R** located rightward and downward of the first left portion **231R** and extending rightward. The lower end **13Le** of the first left edge portion **13L** of the center cover **10** is located leftward and downward relative to the first right portion **231L** and upward relative to the second right portion **232L.** The lower end **13Re** of the first right edge portion **13R** of the center cover **10** is located rightward and downward relative to the first left portion **231R** and upward relative to the second left portion **232R.** According to the present embodiment, dust or water is unlikely to enter through between the center cover **10** and the left side cover **20L** and between the center cover **10** and the right side cover **20R.**

As shown in FIG. **4****,** the center cover **10** is formed with the hole **10h** through which the cylindrical portion **2A** of the fuel tank **2** is inserted. Since the center cover **10** is separate from the left side cover **20L** and the right side cover **20R** and is made of resin, it is possible to easily form the hole **10h** that is suitable for the cylindrical portion **2A** of the fuel tank **2.**

While one embodiment has been described above, the embodiment is merely an example. Various other embodiments are possible.

The shape of the center cover **10,** the left side cover **20L** and the right side cover **20R** described above is merely an example. The shape of the left side cover **20L** and the right side cover **20R** may or may not be in left-right symmetry with each other.

The first left bolts **31L** that connect together the center cover **10** and the left side cover **20L** or the first right bolts **31R** that connect together the center cover **10** and the right side cover **20R** do not need to extend downward. For example, the first left bolt **31L** and the first right bolts **31R** may extend sideward.

The first left edge portion **13L** of the center cover **10** may be arranged downward of the second right edge portion **23L** of the left side cover **20L.** The first right edge portion **13R** of the center cover **10** may be arranged downward of the second left edge portion **23R** of the right side cover **20R.**

The left end portion **13La** of the center cover **10** does not need to overlap with the first contact surface **23LS** of the left side cover **20L** as the vehicle is viewed from the side. The right end portion **13Ra** of the center cover **10** does not need to overlap with the second contact surface **23RS** of the right side cover **20R** as the vehicle is viewed from the side.

The left end portion **13La** of the center cover **10** does not need to overlap with the left connecting portions **11L** of the center cover **10** as the vehicle is viewed from the side. The right end portion **13Ra** of the center cover **10** does not need to overlap with the right connecting portions **11R** of the center cover **10** as the vehicle is viewed from the side.

The left end portion **13Lb** of the center cover **10** does not need to overlap with the bolt head **32Lt** of the second left bolt **32L** as the vehicle is viewed from the side. The right end portion **13Rb** of the center cover **10** does not need to overlap with the bolt head **32Rt** of the second right bolt **32R** as the vehicle is viewed from the side.

The left end portion **13La** or the left end portion **13Lb** of the center cover **10** does not need to be bent downward. For example, the left end portion **13La** and the left end portion **13Lb** of the center cover **10** may extend straight leftward and downward. The right end portion **13Ra** or the right end portion **13Rb** of the center cover **10** does not need to be bent downward. For example, the right end portion **13Ra** and the right end portion **13Rb** of the center cover **10** may extend straight rightward and downward.

The lower end **13Le** of the first left edge portion **13L** of the center cover **10** may be located upward relative to the first right portion **231L** of the left side cover **20L.** The lower end **13Re** of the first right edge portion **13R** of the center cover **10** may be located upward relative to the first left portion **231R** of the right side cover **20R.** The second right edge portion **23L** of the left side cover **20L** does not need to include the first right portion **231L** and the second right portion **232L** shaped as described above. The second left edge portion **23R** of the right side cover **20R** does not need to include the first left portion **231R** and the second left portion **232R** shaped as described above.

There is no particular limitation on the structure for attaching together the left side cover **20L** and the fuel tank **2** and the structure for attaching together the right side cover **20L** and the fuel tank **2.** The left side cover **20L** or the right side cover **20R** may or may not be fixed to the fuel tank **2.** The center cover **10** may or may not be fixed to the fuel tank **2.**

As the vehicle is viewed from the side, a portion of the fuel tank **2** does not need to overlap with the left side cover **20L** and the right side cover **20R.**

A straddled vehicle refers to a vehicle that is straddled by a rider. The straddled vehicle is not limited to the motorcycle **50.** The straddled vehicle may be an auto tricycle, an ATV (All Terrain Vehicle), or a snowmobile, for example.

### Reference Signs List

1: Seat, 2: Fuel tank, 2A: Cylindrical portion, 2a: Fuel filler hole, 2U: Tank upper wall, 2L: Tank left wall, 2R: Tank right wall, 3: Tank cover, 4: Stay, 10: Center cover, 10h: Hole, 11L: Left connecting portion, 11R: Right connecting portion, 12: Center upper wall, 13L: First left edge portion, 13R: First right edge portion, 13La: Left end portion, 13Lb: Left end portion, 13Ra: Right end portion, 13Rb: Right end portion, 13Le: Lower end of first left edge portion, 13Re: Lower end of first right edge portion, 20L: Left side cover, 20R: Right side cover, 21L: Left-side wall, 21R: Right-side wall, 22L: Upper left wall, 22R: Upper right wall, 23L: Second right edge portion, 23Le: Right end of second right edge portion, 23R: Second left edge portion, 23Re: Left end of second left edge portion, 23LS: First contact surface, 23RS: Second contact surface, 31L: First left bolt, 31R: First right bolt, 32L: Second left bolt, 32R: Second right bolt, 50: Motorcycle (straddled vehicle), 231L: First right portion, 231R: First left portion, 232L: Second right portion, 232R: Second left portion

## Claims

1. A straddled vehicle **(50)** comprising:
a seat **(1);**
a fuel tank **(2)** arranged forward of the seat **(1);** and
a tank cover **(3)** arranged forward of the seat **(1)** and covering at least a portion of the fuel tank **(2),** wherein:
the tank cover **(3)** includes a center cover **(10),** a left side cover **(20L)** arranged leftward of the center cover **(10),** and a right side cover **(20R)** arranged rightward of the center cover **(10);**
the left side cover **(20L)** includes a left-side wall **(21L)** located leftward of the fuel tank **(2);**
the right side cover **(20R)** includes a right-side wall **(21R)** located rightward of the fuel tank **(2);**
the center cover **(10)** includes a left connecting portion **(11L)** connected to the left side cover **(20L),** and a right connecting portion **(11R)** connected to the right side cover **(20R);** and
the center cover **(10)** is made of resin, and the left side cover **(20L)** and the right side cover **(20R)** are made of metal; wherein:
the fuel tank **(2)** includes a tank upper wall **(2U),** a tank left-side wall **(2L)** located leftward of the tank upper wall **(2U),** and a tank right-side wall **(2R)** located rightward of the tank upper wall **(2U);**
the center cover **(10)** includes a center upper wall **(12)** arranged upward of the tank upper wall **(2U);**
the left side cover **(20L)** includes an upper left wall **(22L)** extending rightward from the left-side wall **(21L)** and arranged upward of the tank upper wall **(10U);**
the right side cover **(20R)** includes an upper right wall **(22R)** extending leftward from the right-side wall **(21R)** and arranged upward of the tank upper wall **(2U);**
the center upper wall **(12)** includes a first left edge portion **(13L)** overlapping with the upper left wall **(22L)** as the vehicle is viewed from above, and a first right edge portion **(13R)** overlapping with the upper right wall **(22R)** as the vehicle is viewed from above;
the upper left wall **(22L)** includes a second right edge portion **(23L)** overlapping with the center upper wall **(12)** as the vehicle is viewed from above;
the upper right wall **(22R)** includes a second left edge portion **(23R)** overlapping with the center upper wall **(12)** as the vehicle is viewed from above;
the left connecting portion **(11L)** of the center cover **(10)** is provided in the first left edge portion **(13L)** and connected to the second right edge portion **(23L)** of the left side cover **(20L);** and
the right connecting portion **(11R)** of the center cover **(10)** is provided in the first right edge portion **(13R)** and connected to the second left edge portion **(23R)** of the right side cover **(20R);** wherein:
the first left edge portion **(13L)** of the center cover **(10)** overlaps with the second right edge portion **(23L)** of the left side cover **(20L)** as the vehicle is viewed from above and is arranged upward of the second right edge portion **(23L);** and
the first right edge portion **(13R)** of the center cover **(10)** overlaps with the second left edge portion **(23R)** of the right side cover **(20R)** as the vehicle is viewed from above and is arranged upward of the second left edge portion **(23R);**
the straddled vehicle **(50)** further comprising:
a stay **(4)** fixed to the tank upper wall **(2U);**
a second left bolt **(32L)** extending downward that fastens together the left side cover **(20L)** and the stay **(4);** and
a second right bolt **(32R)** extending downward that fastens together the right side cover **(20R)** and the stay **(4);** wherein:
the second left bolt **(32L)** includes a bolt head **(32Lt)** located upward relative to the second right edge portion **(23L)** of the left side cover **(20L);**
the second right bolt **(32R)** includes a bolt head **(32Rt)** located upward relative to the second left edge portion **(23R)** of the right side cover **(20R);**
the first left edge portion **(13L)** of the center cover **(10)** includes a left end portion **(13Lb)** located leftward relative to the bolt head **(32Lt)** of the second left bolt **(32L)** and overlapping with the bolt head **(32Lt)** of the second left bolt **(32L)** as the vehicle is viewed from the side;
the first right edge portion **(13R)** of the center cover **(10)** includes a right end portion **(13Rb)** located rightward relative to the bolt head **(32Rt)** of the second right bolt **(32R)** and overlapping with the bolt head **(32Rt)** of the second right bolt **(32R)** as the vehicle is viewed from the side.

2. The straddled vehicle **(50)** according to claim 1, comprising:
a first left bolt **(31L)** extending downward that fastens together the left connecting portion **(11L)** of the center cover **(10)** and the second right edge portion **(23L)** of the left side cover **(20L);** and
a first right bolt **(31R)** extending downward that fastens together the right connecting portion **(11R)** of the center cover **(10)** and the second left edge portion **(23R)** of the right side cover **(20R).**

3. The straddled vehicle **(50)** according to claim 1 or 2, wherein:
the second right edge portion **(23L)** of the left side cover **(20L)** includes a first contact surface **(23LS)** that is in contact with the first left edge portion **(13L)** of the center cover **(10);**
the second left edge portion **(23R)** of the right side cover **(20R)** includes a second contact surface **(23RS)** that is in contact with the first right edge portion **(13R)** of the center cover **(10);**
the first left edge portion **(13L)** of the center cover **(10)** includes a left end portion **(13La)** located leftward relative to the first contact surface **(23LS)** and overlapping with the first contact surface **(23LS)** as the vehicle is viewed from the side; and
the first right edge portion **(13R)** of the center cover **(10)** includes a right end portion **(13Ra)** located rightward relative to the second contact surface **(23RS)** and overlapping with the second contact surface **(23RS)** as the vehicle is viewed from the side.

4. The straddled vehicle **(50)** according to any one of claims 1 to 3, wherein:
the first left edge portion **(13L)** of the center cover **(10)** includes a left end portion **(13La)** located leftward relative to the left connecting portion **(11L)** and overlapping with the left connecting portion **(11L)** as the vehicle is viewed from the side; and
the first right edge portion **(13R)** of the center cover **(10)** includes a right end portion **(13Ra)** located rightward relative to the right connecting portion **(11R)** and overlapping with the right connecting portion **(11R)** as the vehicle is viewed from the side.

5. The straddled vehicle **(50)** according to any one of claims 1 to 4, wherein the left end portion **(13La, 13Lb)** and/or the right end portion **(13Ra, 13Rb)** of the center cover **(10)** are bent downward.

6. The straddled vehicle **(50)** according to any one of claims 1 to 5, wherein:
the second right edge portion **(23L)** of the left side cover **(20L)** includes a first right portion **(231L)** extending leftward from a right end **(23Le)** of the second right edge portion **(23L),** and a second right portion **(232L)** located leftward and downward of the first right portion **(231L)** and extending leftward;
the second left edge portion **(23R)** of the right side cover **(20R)** includes a first left portion **(231R)** extending rightward from a left end **(23Re)** of the second left edge portion **(23R),** and a second left portion **(232R)** located rightward and downward of the first left portion **(231R)** and extending rightward;
the first left edge portion **(13L)** of the center cover **(10)** includes a lower end **(13Le)** located leftward and downward relative to the first right portion **(231L)** and upward relative to the second right portion **(232L);** and
the first right edge portion **(13R)** of the center cover **(10)** includes a lower end **(13Re)** located rightward and downward relative to the first left portion **(231R)** and upward relative to the second left portion **(232R).**

7. The straddled vehicle **(50)** according to any one of claims 1 to 6, wherein:
the fuel tank **(2)** includes a cylindrical portion **(2A)** extending upward from the tank upper wall **(2U);**
the cylindrical portion **(2A)** is formed with a fuel filler hole **(2a)** whose opening faces upward; and
the center cover **(10)** is formed with a hole **(10h)** into which the cylindrical portion **(2A)** of the fuel tank **(2)** is inserted.

8. The straddled vehicle **(50)** according to claim 7, wherein a center **(2c)** of the fuel filler hole **(2a)** is located rightward or leftward of a vehicle center line **(CL).**

9. The straddled vehicle **(50)** according to any one of claims 1 to 8, wherein the center cover **(10)** is a single resin-made member.

10. The straddled vehicle **(50)** according to any one of claims 1 to 9, wherein:
the left side cover **(20L)** and the right side cover **(20R)** are each a single metal-made member; and
the left side cover **(20L)** and the right side cover **(20R)** overlap with an entirety of the fuel tank **(2)** as the vehicle is viewed from the side.

## Patentansprüche

1. Spreizsitz-Fahrzeug (50), das umfasst:
einen Sitz (1);
einen Kraftstofftank (2), der vor dem Sitz (1) angeordnet ist; sowie
eine Tank-Verkleidung (3), die vor dem Sitz (1) angeordnet ist und wenigstens einen Teil des Kraftstofftanks (2) abdeckt, wobei:
die Tank-Verkleidung (3) eine Mittelverkleidung (10), eine linke Seitenverkleidung (20L), die links von der Mittelverkleidung (10) angeordnet ist, sowie eine rechte Seitenverkleidung (20R) einschließt, die rechts von der Mittelverkleidung (10) angeordnet ist;
die linke Seitenverkleidung (20L) eine linke Seitenwand (21L) einschließt, die links von dem Kraftstofftank (2) positioniert ist;
die rechte Seitenverkleidung (20R) eine rechte Seitenwand (21R) einschließt, die rechts von dem Kraftstofftank (2) positioniert ist;
die Mittelverkleidung (10) einen linken Verbindungsabschnitt (11L), der mit der linken Seitenverkleidung (20L) verbunden ist, sowie einen rechten Verbindungsabschnitt (11R) einschließt, der mit der rechten Seitenverkleidung (20R) verbunden ist; und
die Mittelverkleidung (10) aus Kunststoff besteht, und die linke Seitenverkleidung (20L) sowie die rechte Seitenverkleidung (20R) aus Metall bestehen; wobei:
der Kraftstofftank (2) eine Tank-Oberwand (2U), eine linke Seitenwand (2L) des Tanks, die links von der Tank-Oberwand (2U) positioniert ist, sowie eine rechte Seitenwand (2R) des Tanks einschließt, die rechts von der Tank-Oberwand (2U) positioniert ist;
die Mittelverkleidung (10) eine mittlere Oberwand (12) einschließt, die oberhalb der Tank-Oberwand (2U) angeordnet ist;
die linke Seitenverkleidung (20L) eine linke Oberwand (22L) einschließt, die sich von der linken Seitenwand (21L) aus nach rechts erstreckt und oberhalb der Tank-Oberwand (10U) angeordnet ist;
die rechte Seitenverkleidung (20R) eine rechte Oberwand (22R) einschließt, die sich von der rechten Seitenwand (21R) aus nach links erstreckt und oberhalb der Tank-Oberwand (2U) angeordnet ist;
die mittlere Oberwand (12) einen ersten linken Randabschnitt (13L), der sich, bei Sicht auf das Fahrzeug von oben, mit der oberen linken Wand (22L) überlappt, sowie einen ersten rechten Randabschnitt (13R) einschließt, der sich, bei Sicht auf das Fahrzeug von oben, mit der oberen rechten Wand (22R) überlappt;
die obere linke Wand (22L) einen zweiten rechten Randabschnitt (23L), der sich, bei Sicht auf das Fahrzeug von oben, mit der mittleren Oberwand (12) überlappt;
die obere rechte Wand (22R) einen zweiten linken Randabschnitt (23R), der sich, bei Sicht auf das Fahrzeug von oben, mit der mittleren Oberwand (12) überlappt;
der linke Verbindungsabschnitt (11L) der Mittelverkleidung (10) sich in dem ersten linken Randabschnitt (13L) befindet und mit dem zweiten rechten Randabschnitt (23L) der linken Seitenverkleidung (20L) verbunden ist; und
der rechte Verbindungsabschnitt (11R) der Mittelverkleidung (10) sich in dem ersten rechten Randabschnitt (13R) befindet und mit dem zweiten linken Randabschnitt (23R) der rechten Seitenverkleidung (20R) verbunden ist; wobei:
der erste linke Randabschnitt (13L) der Mittelverkleidung (10) sich, bei Sicht auf das Fahrzeug von oben, mit dem zweiten rechten Randabschnitt (23L) der linken Seitenverkleidung (20L) überlappt und oberhalb des zweiten rechten Randabschnitts (23L) angeordnet ist; und
der erste rechte Randabschnitt (13R) der Mittelverkleidung (10) sich, bei Sicht auf das Fahrzeug von oben, mit dem zweiten linken Randabschnitt (23R) der rechten Seitenverkleidung (20R) überlappt und oberhalb des zweiten linken Randabschnitts (23R) angeordnet ist;
und das Spreizsitz-Fahrzeug (50) des Weiteren umfasst:
einen Steg (4), der an der Tank-Oberwand (2U) befestigt ist;
einen zweiten linken Bolzen (32L), der sich nach unten erstreckt und die linke Seitenverkleidung (20L) und den Steg (4) aneinander befestigt; sowie
einen zweiten rechten Bolzen (32R), der sich nach unten erstreckt und die rechte Seitenverkleidung (20R) und den Steg (4) aneinander befestigt; wobei:
der zweite linke Bolzen (32L) einen Bolzenkopf (32Lt) einschließt, der oberhalb relativ zu dem zweiten rechten Randabschnitt (23L) der linken Seitenverkleidung (20L) positioniert ist;
der zweite rechte Bolzen (32R) einen Bolzenkopf (32Rt) einschließt, der oberhalb relativ zu dem zweiten linken Randabschnitt (23R) der rechten Seitenverkleidung (20R) positioniert ist;
der erste linke Randabschnitt (13L) der Mittelverkleidung (10) einen linken Endabschnitt (13Lb) einschließt, der links relativ zu dem Bolzenkopf (13Lt) des zweiten linken Bolzens (32L) positioniert ist und sich, bei Sicht auf das Fahrzeug von der Seite, mit dem Bolzenkopf (32Lt) des zweiten linken Bolzens (32L) überlappt;
der erste rechte Randabschnitt (13R) der Mittelverkleidung (10) einen rechten Endabschnitt (13Rb) einschließt, der rechts relativ zu dem Bolzenkopf (32Rt) des zweiten rechten Bolzens (32R) positioniert ist und sich, bei Sicht auf das Fahrzeug von der Seite, mit dem Bolzenkopf (32Rt) des zweiten rechten Bolzens (32R) überlappt.

2. Spreizsitz-Fahrzeug (50) nach Anspruch 1, das umfasst:
einen ersten linken Bolzen (31L), der sich nach unten erstreckt und den linken Verbindungsabschnitt (11L) der Mittelverkleidung (10) und den zweiten rechten Randabschnitt (23L) der linken Seitenverkleidung (20L) aneinander befestigt; sowie
einen ersten rechten Bolzen (31R), der sich nach unten erstreckt und den rechten Verbindungsabschnitt (11R) der Mittelverkleidung (10) und den zweiten linken Randabschnitt (23R) der rechten Seitenverkleidung (20R) aneinander befestigt.

3. Spreizsitz-Fahrzeug (50) nach Anspruch 1 oder 2, wobei:
der zweite rechte Randabschnitt (23L) der linken Seitenverkleidung (20L) eine erste Kontaktfläche (23LS) einschließt, die in Kontakt mit dem ersten linken Randabschnitt (13L) der Mittelverkleidung (10) ist;
der zweite linke Randabschnitt (23R) der rechten Seitenverkleidung (20R) eine zweite Kontaktfläche (23RS) einschließt, die in Kontakt mit dem ersten rechten Randabschnitt (13R) der Mittelverkleidung (10) ist;
der erste linke Randabschnitt (13L) der Mittelverkleidung (10) einen linken Endabschnitt (13La), der links relativ zu der ersten Kontaktfläche (23LS) positioniert ist und sich, bei Sicht auf das Fahrzeug von der Seite, mit der ersten Kontaktfläche (23LS) überlappt; und
der erste rechte Randabschnitt (13R) der Mittelverkleidung (10) einen rechten Endabschnitt (13Ra), der rechts relativ zu der zweiten Kontaktfläche (23RS) positioniert ist und sich, bei Sicht auf das Fahrzeug von der Seite, mit der zweiten Kontaktfläche (23RS) überlappt.

4. Spreizsitz-Fahrzeug (50) nach einem der Ansprüche 1 bis 3, wobei:
der erste linke Randabschnitt (13L) der Mittelverkleidung (10) einen linken Endabschnitt (13La) einschließt, der links relativ zu dem linken Verbindungsabschnitt (11L) positioniert ist und sich, bei Sicht auf das Fahrzeug von der Seite, mit dem linken Verbindungsabschnitt (11L) überlappt; und
der erste rechte Randabschnitt (13R) der Mittelverkleidung (10) einen rechten Endabschnitt (13Ra), der rechts relativ zu dem rechten Verbindungsabschnitt (11R) positioniert ist und sich, bei Sicht auf das Fahrzeug von der Seite, mit dem rechten Verbindungsabschnitt (11R) überlappt.

5. Spreizsitz-Fahrzeug (50) nach einem der Ansprüche 1 bis 4, wobei der linke Endabschnitt (13La, 13Lb) und/oder der rechte Endabschnitt (13Ra, 13Rb) der Mittelverkleidung (10) nach unten gebogen sind/ist.

6. Spreizsitz-Fahrzeug (50) nach einem der Ansprüche 1 bis 5, wobei:
der zweite rechte Randabschnitt (23L) der linken Seitenverkleidung (20L) einen ersten rechten Abschnitt (231L), der sich von einem rechten Ende (23Le) des zweiten rechten Randabschnitts (23L) aus nach links erstreckt, sowie einen zweiten rechten Abschnitt (232L) einschließt, der links und unterhalb von dem rechten Randabschnitt (231L) positioniert ist und sich nach links erstreckt;
der zweite linke Randabschnitt (23R) der rechten Seitenverkleidung (20R) einen ersten linken Abschnitt (231R), der sich von einem linken Ende (23Re) des zweiten linken Randabschnitts (23R) aus nach rechts erstreckt, und einen zweiten linken Abschnitt (232R) einschließt, der rechts und unterhalb von dem ersten linken Abschnitt (231R) positioniert ist und sich nach rechts erstreckt;
der erste linke Randabschnitt (13L) der Mittelverkleidung (10) ein unteres Ende (13Le) einschließt, das relativ zu dem ersten rechten Abschnitt (231L) links und unterhalb und relativ zu dem zweiten rechten Abschnitt (232L) oberhalb positioniert ist; und
der erste rechte Randabschnitt (13R) der Mittelverkleidung (10) ein unteres Ende (13Re) einschließt, das relativ zu dem ersten linken Abschnitt (231R) rechts und unterhalb und relativ zu dem zweiten linken Abschnitt (232R) oberhalb positioniert ist.

7. Spreizsitz-Fahrzeug (50) nach einem der Ansprüche 1 bis 6, wobei:
der Kraftstofftank (2) einen zylindrischen Abschnitt (2A) einschließt, der sich von der Tank-Oberwand (2U) nach oben erstreckt;
der zylindrische Abschnitt (2A) mit einem Kraftstoff-Einfüllloch (2a) versehen ist, dessen Öffnung nach oben gewandt ist; und
die Mittelverkleidung (10) mit einem Loch (10h) versehen ist, in das der zylindrische Abschnitt (2A) des Kraftstofftanks (2) eingeführt ist.

8. Spreizsitz-Fahrzeug (50) nach Anspruch 7, wobei eine Mitte (2c) des Kraftstoff-Einfülllochs (2a) rechts oder links von einer Fahrzeug-Mittellinie (CL) positioniert ist.

9. Spreizsitz-Fahrzeug (50) nach einem der Ansprüche 1 bis 8, wobei die Mittelverkleidung (10) ein einzelnes, aus Kunststoff bestehendes Element ist.

10. Spreizsitz-Fahrzeug (50) nach einem der Ansprüche 1 bis 9, wobei:
die linke Seitenverkleidung (20L) sowie die rechte Seitenverkleidung (20R) jeweils ein einzelnes, aus Metall bestehendes Element sind; und
die linke Seitenverkleidung (20L) sowie die rechte Seitenverkleidung (20R) sich, bei Sicht auf das Fahrzeug von der Seite, mit dem Kraftstofftank (2) als Ganzes überlappen.

## Revendications

1. Véhicule à enfourcher (50) comprenant :
un siège (1) ;
un réservoir de carburant (2) agencé à l'avant du siège (1) ; et
un carénage de réservoir (3) agencé à l'avant du siège (1) et recouvrant au moins une portion du réservoir de carburant (2),
dans lequel :
le carénage de réservoir (3) inclut un carénage central (10), un carénage latéral gauche (20L) agencé à gauche du carénage central (10), et un carénage latéral droit (20R) agencé à droite du carénage central (10) ;
le carénage latéral gauche (20L) inclut une paroi latérale gauche (21L) située à gauche du réservoir de carburant (2) ;
le carénage latéral droit (20R) inclut une paroi latérale droite (21R) située à droite du réservoir de carburant (2) ;
le carénage central (10) inclut une portion de connexion gauche (11L) connectée au carénage latéral gauche (20L), et une portion de connexion droite (11R) connectée au carénage latéral droit (20R) ; et
le carénage central (10) est en résine, et le carénage latéral gauche (20L) et le carénage latéral droit (20R) sont en métal ;
dans lequel :
le réservoir de carburant (2) inclut une paroi supérieure de réservoir (2U), une paroi latérale gauche de réservoir (2L) située à gauche de la paroi supérieure de réservoir (2U), et une paroi latérale droite de réservoir (2R) située à droite de la paroi supérieure de réservoir (2U) ;
le carénage central (10) inclut une paroi supérieure centrale (12) agencée au-dessus de la paroi supérieure de réservoir (2U) ;
le carénage latéral gauche (20L) inclut une paroi supérieure gauche (22L) s'étendant vers la droite à partir de la paroi latérale gauche (21L) et agencée au-dessus de la paroi supérieure de réservoir (10U) ;
le carénage latéral droit (20R) inclut une paroi supérieure droite (22R) s'étendant vers la gauche à partir de la paroi latérale droite (21R) et agencée au-dessus de la paroi supérieure de réservoir (2U) ;
la paroi supérieure centrale (12) inclut une première portion de bord gauche (13L) chevauchant la paroi supérieure gauche (22L) en vue de dessus du véhicule, et une première portion de bord droite (13R) chevauchant la paroi supérieure droite (22R) en vue de dessus du véhicule ;
la paroi supérieure gauche (22L) inclut une deuxième portion de bord droite (23L) chevauchant la paroi supérieure centrale (12) en vue de dessus du véhicule ;
la paroi supérieure droite (22R) inclut une deuxième portion de bord gauche (23R) chevauchant la paroi supérieure centrale (12) en vue de dessus du véhicule ;
la portion de connexion gauche (11L) du carénage central (10) est pourvue dans la première portion de bord gauche (13L) et connectée à la deuxième portion de bord droite (23L) du carénage latéral gauche (20L) ; et
la portion de connexion droite (11R) du carénage central (10) est pourvue dans la première portion de bord droite (13R) et connectée à la deuxième portion de bord gauche (23R) du carénage latéral droit (20R) ;
dans lequel :
la première portion de bord gauche (13L) du carénage central (10) chevauche la deuxième portion de bord droite (23L) du carénage latéral gauche (20L) en vue de dessus du véhicule et est agencée au-dessus de la deuxième portion de bord droite (23L) ; et
la première portion de bord droite (13R) du carénage central (10) chevauche la deuxième portion de bord gauche (23R) du carénage latéral droit (20R) en vue de dessus du véhicule et est agencée au-dessus de la deuxième portion de bord gauche (23R) ;
le véhicule à enfourcher (50) comprenant en outre :
un support (4) fixé à la paroi supérieure de réservoir (2U) ;
un deuxième boulon gauche (32L) s'étendant vers le bas qui fixe ensemble le carénage latéral gauche (20L) et le support (4) ; et
un deuxième boulon droit (32R) s'étendant vers le bas qui fixe ensemble le carénage latéral droit (20R) et le support (4) ;
dans lequel :
le deuxième boulon gauche (32L) inclut une tête de boulon (32Lt) située plus haut que la deuxième portion de bord droite (23L) du carénage latéral gauche (20L) ;
le deuxième boulon droit (32R) inclut une tête de boulon (32Rt) située plus haut que la deuxième portion de bord gauche (23R) du carénage latéral droit (20R) ;
la première portion de bord gauche (13L) du carénage central (10) inclut une portion d'extrémité gauche (13Lb) située à gauche de la tête de boulon (32Lt) du deuxième boulon gauche (32L) et chevauchant la tête de boulon (32Lt) du deuxième boulon gauche (32L) en vue latérale du véhicule ;
la première portion de bord droite (13R) du carénage central (10) inclut une portion d'extrémité droite (13Rb) située à droite de la tête de boulon (32Rt) du deuxième boulon droit (32R) et chevauchant la tête de boulon (32Rt) du deuxième boulon droit (32R) en vue latérale du véhicule.

2. Véhicule à enfourcher (50) selon la revendication 1, comprenant :
un premier boulon gauche (31L) s'étendant vers le bas qui fixe ensemble la portion de connexion gauche (11L) du carénage central (10) et la deuxième portion de bord droite (23L) du carénage latéral gauche (20L) ; et
un premier boulon droit (31R) s'étendant vers le bas qui fixe ensemble la portion de connexion droite (11R) du carénage central (10) et la deuxième portion de bord gauche (23R) du carénage latéral droit (20R).

3. Véhicule à enfourcher (50) selon la revendication 1 ou 2, dans lequel :
la deuxième portion de bord droite (23L) du carénage latéral gauche (20L) inclut une première surface de contact (23LS) qui est en contact avec la première portion de bord gauche (13L) du carénage central (10) ;
la deuxième portion de bord gauche (23R) du carénage latéral droit (20R) inclut une deuxième surface de contact (23RS) qui est en contact avec la première portion de bord droite (13R) du carénage central (10) ;
la première portion de bord gauche (13L) du carénage central (10) inclut une portion d'extrémité gauche (13La) située à gauche de la première surface de contact (23LS) et chevauchant la première surface de contact (23LS) en vue latérale du véhicule ; et
la première portion de bord droite (13R) du carénage central (10) inclut une portion d'extrémité droite (13Ra) située à droite de la deuxième surface de contact (23RS) et chevauchant la deuxième surface de contact (23RS) en vue latérale du véhicule.

4. Véhicule à enfourcher (50) selon l'une quelconque des revendications 1 à 3, dans lequel :
la première portion de bord gauche (13L) du carénage central (10) inclut une portion d'extrémité gauche (13La) située à gauche de la portion de connexion gauche (11L) et chevauchant la portion de connexion gauche (11L) en vue latérale du véhicule ; et
la première portion de bord droite (13R) du carénage central (10) inclut une portion d'extrémité droite (13Ra) située à droite de la portion de connexion droite (11R) et chevauchant la portion de connexion droite (11R) en vue latérale du véhicule.

5. Véhicule à enfourcher (50) selon l'une quelconque des revendications 1 à 4, dans lequel la portion d'extrémité gauche (13La, 13Lb) et/ou la portion d'extrémité droite (13Ra, 13Rb) du carénage central (10) sont pliées vers le bas.

6. Véhicule à enfourcher (50) selon l'une quelconque des revendications 1 à 5, dans lequel :
la deuxième portion de bord droite (23L) du carénage latéral gauche (20L) inclut une première portion droite (231L) s'étendant vers la gauche à partir d'une extrémité droite (23Le) de la deuxième portion de bord droite (23L), et une deuxième portion droite (232L) située à gauche et en dessous de la première portion droite (231L) et s'étendant vers la gauche ;
la deuxième portion de bord gauche (23R) du carénage latéral droit (20R) inclut une première portion gauche (231R) s'étendant vers la droite à partir d'une extrémité gauche (23Re) de la deuxième portion de bord gauche (23R), et une deuxième portion gauche (232R) située à droite et en dessous de la première portion gauche (231R) et s'étendant vers la droite ;
la première portion de bord gauche (13L) du carénage central (10) inclut une extrémité inférieure (13Le) située à gauche et plus bas que la première portion droite (231L) et plus haut que la deuxième portion droite (232L) ; et
la première portion de bord droite (13R) du carénage central (10) inclut une extrémité inférieure (13Re) située à droite et plus bas que la première portion gauche (231R) et plus haut que la deuxième portion gauche (232R).

7. Véhicule à enfourcher (50) selon l'une quelconque des revendications 1 à 6, dans lequel :
le réservoir de carburant (2) inclut une portion cylindrique (2A) s'étendant plus haut que la paroi supérieure de réservoir (2U) ;
la portion cylindrique (2A) est munie d'un orifice de remplissage de carburant (2a) dont l'ouverture est orientée vers le haut ; et
le carénage central (10) est muni d'un orifice (10h) dans lequel est insérée la portion cylindrique (2A) du réservoir de carburant (2).

8. Véhicule à enfourcher (50) selon la revendication 7, dans lequel le centre (2c) de l'orifice de remplissage de carburant (2a) est situé à droite ou à gauche d'une ligne centrale du véhicule (CL).

9. Véhicule à enfourcher (50) selon l'une quelconque des revendications 1 à 8, dans lequel le carénage central (10) est un élément unique en résine.

10. Véhicule à enfourcher (50) selon l'une quelconque des revendications 1 à 9, dans lequel :
le carénage latéral gauche (20L) et le carénage latéral droit (20R) sont chacun constitués d'un seul élément métallique ; et
le carénage latéral gauche (20L) et le carénage latéral droit (20R) chevauchent l'entièreté du réservoir de carburant (2) en vue latérale du véhicule.
